(19) Europäisches Patentamt
European Patent Office
Office européen des brevets

(11) **EP 1 771 929 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **05714986.6**

(22) Anmeldetag: **17.02.2005**

(51) Int Cl.:
*H02H 7/085* *(2006.01)*   *H02H 3/44* *(2006.01)*

(86) Internationale Anmeldenummer:
**PCT/DE2005/000271**

(87) Internationale Veröffentlichungsnummer:
**WO 2006/010349 (02.02.2006 Gazette 2006/05)**

(54) **VERFAHREN UND VORRICHTUNG ZUR ERKENNUNG VON EINKLEMMSITUATIONEN BEI VERSTELLANTRIEBEN IN KRAFTFAHRZEUGEN**

METHOD AND DEVICE FOR IDENTIFYING PINCHING SITUATIONS IN DISPLACING DRIVES IN MOTOR VEHICLES

PROCEDE ET DISPOSITIF POUR IDENTIFIER DES SITUATIONS DE BLOCAGE DANS DES DISPOSITIFS DE REGLAGE

(84) Benannte Vertragsstaaten:
**DE ES FR GB IT SE**

(30) Priorität: **24.07.2004 DE 102004036116**
**24.12.2004 DE 102004062651**

(43) Veröffentlichungstag der Anmeldung:
**11.04.2007 Patentblatt 2007/15**

(73) Patentinhaber: **Conti Temic microelectronic GmbH**
**90411 Nürnberg (DE)**

(72) Erfinder: **ÖXLE, Thomas**
**88677 Markdorf (DE)**

(56) Entgegenhaltungen:
**EP-A- 0 716 492    DE-A1- 19 840 164**
**DE-A1- 19 941 475    US-A- 5 945 796**
**US-A1- 2003 222 610**

**EP 1 771 929 B1**

**Beschreibung**

Das Verfahren und die Schaltungsanordnung beziehen sich auf die Erkennung von Einklemmsituationen bei elektrisch angetriebenen Verstellantrieben in Kraftfahrzeugen wie beispielsweise Fensterhebem, Schiebedächern oder Sitzverstelleinrichtungen.

Für solche Verstellantriebe gibt es diverse Vorschriften und Richtlinien wie die 74/60/EWG der Europäischen Union, die EC21 der United Nations Economic Commission for Europe (UNECE) und die FMVSS118 der amerikanischen National Highway Traffic Safety Administration. All diese Vorschriften fordern unter bestimmten Betriebs- und Prüfbedirigungen eine Begrenzung der Einklemmkraft auf maximal 100 Newton. Die Elastizität des vorgeschriebenen Prüfkörpers ist bei der 74/60/EWG und der EC21 mit 10 N/mm angegeben. Bei der FMVSS118 ist für Prüfkörper, die kleiner als 25 mm Durchmesser sind, eine Elastizität von 65 N/mm und für größere Prüfkörper eine Elastizität von 20 N/mm angegeben. Für einen sicheren Schutz der Fahrzeuginsassen bei allen in der Praxis vorkommenden Einklemmsituationen muss ein Schutzsystem Klemmkörper mit sehr verschiedenen Elastizitäten erkennen können.

Im Stand der Technik ist dazu eine Anzahl von Schutzsystemen bekannt.

Aus EP-A-0 716 492 ist bekannt, aus einem zuletzt gemessenem Stromwert und jeweiligen in einem ersten Zwischenspeicher gespeicherten Werten eine Differenz zu bilden. Diese Differenzen werden in einem zweiten Zwischenspeicher gespeichert. Diese im zweiten Zwischenspeicher gespeicherten einzelnen Differenzen werden mit unterschiedlichen Referenzen aus einem Festwertspeicher verglichen. Ist nunmehr einer der Werte aus dem zweiten Zwischenspeicher größer als ein zugehöriger Wert aus dem Festwertspeicher wird der Antrieb reversiert oder gestoppt.

Aus US-A-2003/222610 ist es bekannt, bei einem elektrisch betriebenen Motor die Drehzahlverminderung des Motors zu bestimmt und diese gewonnenen Größe weiter zu verarbeiten.

In der DE 27 27 518 wird zur Realisierung eines Einklemmschutzsystems vorgeschlagen, die Schließkraft über einen definierten Weg oder eine definierte Zeit zu erfassen und diese erfassten Werte zu integrieren und/oder zu differenzieren. Wenn das Ergebnis dieser Operationen über einen zuvor gespeicherten Wert hinausgeht, wird der Antrieb abgeschaltet oder die Bewegungsrichtung umgedreht.

Im Zusatz DE 27 56 972 zur DE 27 27 518 wird vorgeschlagen, dass der Anstieg der Kraft aus dem Anstieg des Motorstroms ermittelt wird.

In der DE 30 34 118 ist ein Einklemmschutz-System beschrieben, das von der Drehzahl oder der Geschwindigkeit des Aggregates oder des Stellorgans abhängige Messwerte laufend erfasst und mit einem auf den Anfangs-Messwert bezogenen Grenzwert vergleicht und bei Grenzwertüberschreitung die Verstellrichtung des Stellorgans kurzzeitig umkehrt und dann das Stellorgan abschaltet.

Aus der DE 33 03 590 ist ein Schutzsystem bekannt, das den Verlauf der Leistung des Antriebsmotors über dem Weg erfasst. Der Antriebsmotor wird gestoppt oder seine Antriebsrichtung umgekehrt, wenn das Leistungs-Weg-Diagramm eine zugeordnete Leistungs-Toleranzgrenze überschreitet.

In der DE 35 32 078 ist beschrieben, zur Realisierung eines Einklemmschutzsystems die Änderungen des Motorstroms während der Schließbewegung in konstanten Zeitintervallen zu erfassen und diese Änderungen mit einem Grenzwert zu vergleichen. Beim Überschreiten des Grenzwertes wird auf öffnungsbewegung umgeschaltet.

Die EP 331 659 beschreibt eine Schutzschaltung, die den Motorstrom in gleichmäßigen Zeitintervallen erfasst..Der Motor wird abgeschaltet, wenn der Motorstrom um einen vorgegebenen Wert über einem aus mehreren zurückliegenden Werten gebildeten Mittelwert liegt.

Aus der DE 40 00 730 ist ein Verfahren bekannt, bei dem eine Kenngröße, die einen Bezug zur Verstellkraft hat, und der vom Verstellteil zurückgelegte Weg erfasst wird. Es erfolgt die Ermittlung mindestens einer Ableitung der Kenngröße nach dem Weg. Die Ergebnisse der Ableitungen werden mit Grenzwerten verglichen und bei Grenzwertüberschreitung der Antrieb abgeschaltet oder die Antriebsrichtung umgekehrt.

Bei allen zuvor genannten Verfahren wird eine Kenngröße ermittelt, die einen Bezug zur absoluten Verstellkraft oder zum Anstieg der Verstellkraft innerhalb einer bestimmten Zeit $\Delta t$ oder innerhalb eines bestimmten Weges $\Delta s$ hat. Wenn die Kenngröße einen bestimmten Schwellwert g überschreitet, wird der Antrieb abgeschaltet oder die Bewegungsrichtung umgekehrt. Bei einer Einklemmsituation, bei der die gesamte Elastizität des Antriebs und des Klemmkörpers 20 N/mm beträgt, baut sich innerhalb von 5 mm eine Klemmkraft von 100 N auf. Beträgt die Gesamtelastizität dagegen nur 5 N/mm, hat sich nach 5 mm Verstellweg erst eine Kraft von 25 N aufgebaut.

Die genannten Verfahren haben alle den Nachteil, dass die Parameter Zeit $\Delta t$, Weg $\Delta s$ und die Schwelle g nicht so eingestellt werden können, dass sowohl bei weichen als auch bei harten Klemmkörpern die Erkennung von Einklemmsituationen gesichert und dabei gleichzeitig eine ausreichende Robustheit gegen Fehlauslösung gegeben ist.

In der DE 40 00 730 wird zur Lösung dieses Problems vorgeschlagen die Ableitung der Kenngröße auf Basis von verschiedenen Wegabschnitten zu bilden und diese einzelnen Ergebnisse mit unterschiedlichen Grenzwerten zu vergleichen. Die zur Berechnung der Ableitung notwendige Divisionsberechnung durch die in solchen Systemen üblicherweise eingesetzten Mikrocomputern ist zeitaufwendig. Um alle zeitlichen Anforderungen des Systems erfüllen zu können, kann es zur Berechnung mehrerer Ableitungen notwendig werden, einen leistungsstärkeren und damit kostenaufwendigeren Mikrocomputer einzusetzen.

In der DE 198 40 162 A1 wird zur Erkennung verschiedener Einklemmszenarien vorgeschlagen, mehrere parallele Berechnungen mit unterschiedlichen Parametersätzen durchzuführen, wobei die Parametersätze der einzelnen Berechnungen für bestimmte Einklemmszenarien optimiert sind.

Nachteilig bei den beiden zuletzt genannten Verfahren ist der erhöhte Rechenaufwand für die zusätzlichen Berechnungen und der erhöhte Speicherbedarf für die einzelnen Parametersätze. Als weiterer Nachteil ist zu sehen, dass ein solches Verfahren nur für eine begrenzte Anzahl von Einklemmszenarien optimiert werden kann.

Aus der DE 199 41 475 ist ein zweistufiges Verfahren zur Anpassung an verschiedene Federraten bekannt, bei dem die Änderungen der Drehzahl erfasst und aufsummiert werden. In der ersten Stufe wird die aufsummierte Drehzahländerung mit einer Schwelle verglichen und beim Überschreiten dieser Schwelle die zweite Stufe des Verfahrens gestartet. In der zweiten Stufe wird dann die aufsummierte Drehzahländerung mit einem vorgegebenen zeitlichen Grenzwertverlauf verglichen rund beim Überschreiten dieses Grenzwertes der Antrieb abgeschaltet oder reversiert. Auch dieses Verfahren hat den Nachteil, dass die Schwelle in der ersten Stufe und die vorgegebene Toleranz $\Delta$ in der zweiten Stufe nur für eine Federrate optimal eingestellt werden kann.

Die DE 198 40 164 A1 beschreibt ein Verfahren zum Verstellen eines beweglichen Fahrzeugteils zwischen mindestens zwei Stellungen, wobei das Fahrzeugteil von einem Elektromotor angetrieben wird. Dabei wird ein Pulssignal proportional zur Drehbewegung des Elektromotors erzeugt und einer Steuereinheit zum Steuern des Motors zugeführt, wobei der Zeitpunkt des Eingangs eines jeden Signals an der Steuereinheit erfasst wird, und zu bestimmten Zeitpunkten aus mindestens einem Teil dieser bisher gemessenen Zeitpunkte jeweils ein Wert für die Änderung der Motordrehzahl bestimmt wird. Aus jedem Drehzahländerungswert wird ein Kraftänderungswert berechnet und mindestens ein Teil der bisher ermittelten Kraftänderungswerte mit einer Gewichtung aufsummiert, um einen Wert für die momentane Krafteinwirkung auf das bewegliche Fahrzeugteil zu bestimmen, wobei dieser Wert als ein Kriterium bei der Entscheidung verwendet wird, ob der Motor abgeschaltet bzw. reversiert wird oder nicht. Dabei erfolgt eine kraftabhängige und schwellwertbasierte Gewichtung der Kraftänderungswerte derart, dass das Gewicht eines Kraftänderungswerts Null ist, sofern der Wert unterhalb eines unteren Schwellwerts liegt, während das Gewicht für alle aufeinander folgenden Werte, die diesen Schwellwert übersteigen, Eins ist. Die Gewichtung dient in diesem Verfahren zur schwellwertbasierten Selektion einzelner Kraftänderungswerte für das Aufsummieren.

Der Erfindung liegt die Aufgabe zugrunde ein Verfahren anzugeben, das es auf einfache Weise ermöglicht, ein Einklemmschutzsystem für Antriebssysteme in Kraftfahrzeugen zu realisieren, mit welchem sowohl weiche als auch harte Klemmkörper detektierbar sind und gleichzeitig eine hohe Zuverlässigkeit gegenüber Fehlauslösungen gegeben ist.

Die Aufgabe wird durch die Merkmale des Anspruchs 1 gelöst.

Vorteilhafte Weiterbildungen sind Gegenstand der Unteransprüche.

Das vorgestellte Verfahren basiert auf einer Berücksichtigung zeitlich zurückliegender und entsprechend gewichteter Momentanwerte einer die auftretende Verstellkraft kennzeichnenden Größe oder einer daraus abgeleiteten Größe. Neben der aktuellen Messung gehen also Messwerte vorangehender Messungen abhängig von ihrem Erfassungs- oder Messzeitpunkt gewichtet entsprechend ihrem Zurückliegen in die Bestimmung der für die Klemmkraft kennzeichnenden Größe ein. Hierzu werden mindestens zwei Messwerte der die

Verstellkraft kennzeichnenden Größe oder einer aus diesen Werten abgeleitete Größe hinsichtlich ihres Erfässungszeitpunkts miteinander verglichen und gewichtet.

Die für die auftretende Verstellkraft kennzeichnende Größe wird vorzugsweise aus dem Motorstrom und/oder der Motorklemmenspannung und/oder der vom Motor induzierten Spannung und/oder der Drehzahl und/oder der Verstellgeschwindigkeit und/oder des Ankerwiderstands und/oder der Ankerinduktivität und/oder dem Rotorträgheitsmoment und/oder der Temperatur und/oder aus Motorkennlinien ermittelt..Diese Werte werden vorzugsweise in gleichmäßigen zeitlichen Abständen und/oder nach bestimmten vom Antrieb zurückgelegten Wegsegmenten erfasst.

Darüber hinaus wird als eine die Verstellkraft kennzeichnende Größe eine Veränderung der Verstellkraft in Form von Differenzwerten von Messwerten der Verstellkraft ermittelt. Zusätzlich zur Ermittlung der Veränderung der Verstellkraft, welche der Identifizierung der Art und Form des Klemmkörpers - weich oder hart - dient, werden die erfassten Messwerte der Verstellkraft oder die ermittelte Differenz von Messwerten entsprechend des Erfassungs- oder Messzeitpunkts zeitabhängig gewichtet. Dies ermöglicht eine besonders schnelle und unabhängig von der Art und Form des Klemmkörpers genaue Identifizierung eines Einklemmvorgangs, so dass Fehlauslösungen sicher vermieden sind und eine Reversierung des Verstellvorgangs besonders schnell ausgelöst werden kann. Auch können durch eine zeitabhängige Gewichtung der Messwerte alterungsbedingte und/oder temperaturabhängige Messtoleranzen berücksichtigt werden.

In einer möglichen Ausführungsform werden die Messwerte der die Verstellkraft kennzeichnenden Größe oder einer aus diesen Werten abgeleiteten Größe derart gewichtet, dass derjenige Wert umso schwächer gewichtet wird, dessen Erfassungszeitpunkt zeitlich länger zurückliegt.

Für eine kontinuierliche Überwachung des Verstellvorgangs werden die Messwerte für die Verstellkraft in gleichmäßigen zeitlichen Abständen und/oder nach bestimmten vom Antrieb zurückgelegten Wegsegmenten erfasst.

Eine Erfassung der Messwerte in zeitlichen Abständen ermöglicht einen sicheren und robusten Einklemmschutz gegenüber äußeren Störungen. Durch die Erfassung des zurückgelegten Wegs in Abhängigkeit von der Zeit kann der Verstellvorgang zusätzlich unabhängig von der Verstellkraftänderung einfach und sicher überwacht werden.

Je nach Art und Größe des zu überwachenden Verstellvorgangs, z. B. einer Seitenscheibe in einer Fahrzeugtür oder einem Dachfenster, werden als abgeleitete Größe eine, zwei oder mehrere Differenzen von Messwerten oder gespeicherten Werten gebildet. Je nach Art des Verfahrens wird der einzelne Messwert selbst und/oder die Differenz aus zwei Messwerten mit einem zugehörigen zeitabhängigen Gewichtungsfaktor verarbeitet. Dabei wird die die Klemmkraft kennzeichnende Größe durch Addition der gewichteten Differenzen und/oder der gewichteten Einzelwerte und deren zugehörige Differenzen ermittelt. Somit wird der Anstieg der für die auftretende Verstellkraft kennzeichnende Größe durch zumindest zwei Differenzen, also unter Berücksichtigung des vorausgehenden Verlaufs bewertet.

Für eine Überwachung des momentanen Verstellvorgangs auf einen sicheren Einklemmschutz werden zur Differenzbildung die zuletzt gespeicherten und/oder erfassten Messwerte für die Verstellkraft verwendet. Für eine den gesamten Verstellvorgang berücksichtigende Überwachung werden zur Differenzbildung der momentane Messwert und ein länger zurückliegender Messwert oder unterschiedlich lang zurückliegende Messwerte verwendet. Vorzugsweise ist der jeweilige Gewichtungsfaktor für die jeweilige Differenzbildung vom zeitlichen Abstand zwischen dem zuletzt gespeicherten Wert und dem unmittelbar zeitlich vorangegangenen Wert oder einem länger zurückliegenden Wert abhängig. In einer einfachen Form werden die Messwerte entsprechend ihres Messzeitpunkts zeitfolgerichtig in einen Speicher hinterlegt. Bei der Verwendung von gespeicherten Werten wird der jeweilige Gewichtungsfaktor anhand des Abstands zwischen den Speicherpositionen der zur Differenzbildung herangezogenen Messwerte bestimmt.

Zusätzlich oder alternativ kann der jeweilige Gewichtungsfaktor und/oder die zur Differenzbildung herangezogene Speicherposition in Abhängigkeit von der aktuellen Verstellgeschwindigkeit der Verstelleinrichtung und/oder dem zurückgelegten Verstellweg bestimmt werden. Auch kann eine Einstellung eines gemeinsamen Gewichtungsfaktors für einen Bereich entlang des Verstellwegs und für die innerhalb des Bereiches erfassten Messwerte erfolgen. Beispielsweise kann der Gewichtungsfaktor bei einem in der offenen Endstellung befindlichen Verstellobjekts, z. B. einer heruntergelassenen Seitenscheibe, geringer sein, als bei einem in einer Zwischenstellung befindlichen Verstellobjekts, z. B. einer halboffenen Seitenscheibe. Mit anderen Worten: Zwischen den Endstellungen des Verstellobjekts können mehrere Wegbereiche mit zugehörigen Gewichtungsfaktoren vorgegeben werden. Beispielsweise beginnt der Bereich eines Fensterheberstellantriebs wenige Millimeter unterhalb der oberen Dichtung, wobei diesem Bereich ein geringer Gewichtungsfaktor zugeordnet ist. An der oberen Anschlagposition endet der Bereich, wobei diesem ein höherer Gewichtungsfaktor zugeordnet ist. Auch kann der Gewichtungsfaktor innerhalb eines Bereichs langsam oder stetig steigen bzw. abnehmen..

Auch können weitere äußere Werte, z. B. die Fahrzeuggeschwindigkeit, die Änderung der Bordnetzspannung, bei der Einstellung des Gewichtungsfaktors berücksichtigt werden.

Ausführungsbeispiele der Erfindung werden nachfolgend anhand einer Zeichnung näher beschrieben.

Darin zeigen:

Fig. 1        schematisch ein Blockdiagramm für ein Verfahren zur Erkennung von Einklemmsituationen anhand von gewichteten Momentanwerten einer Verstellkraft oder einer damit korrespondierenden Größe einer motorangetriebenen Verstelleinrichtung, und

Fig. 2 bis Fig. 3    schematisch alternative Ausführungsformen des Blockdiagramms gemäß Figur 1.

Einander entsprechende Teile sind in allen Figuren mit den gleichen Bezugszeichen versehen.

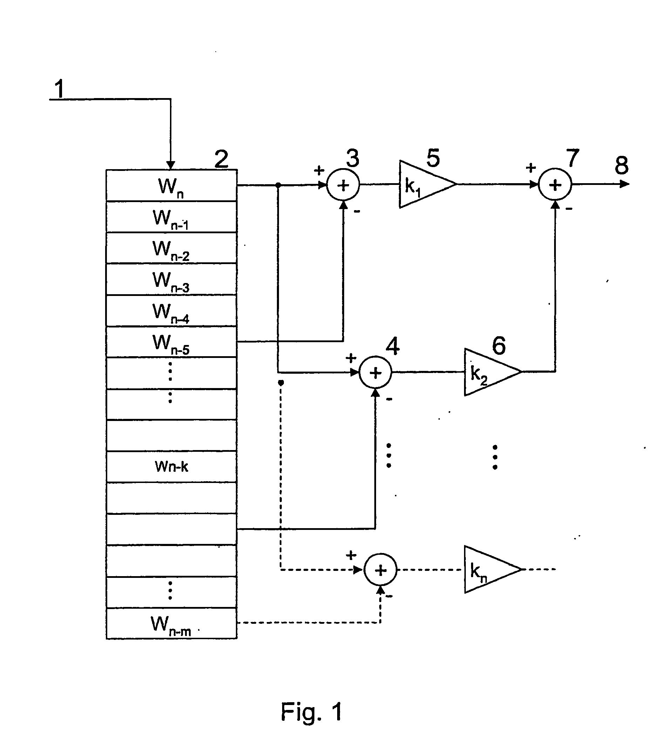

In den Figuren 1 bis 3 sind beispielhaft verschiedene Blockdiagramme für ein Verfahren zur Erkennung einer Einklemmsituation bei einem elektrisch angetriebenen, nicht näher dargestellten Verstellantrieb, z. B. einen Fensterheber, einem Schiebedach oder einer Sitzverstelleinrichtung, dargestellt.

Beim erfindungsgemäßen Verfahren wird aus einer die Verstellkraft des Verstellantriebs kennzeichnenden Größe 1 eine die Klemmkraft kennzeichnende Größe 8 ermittelt. Die Erfindung beruht dabei auf dem Grundgedanken einer in Abhängigkeit vom Erfassungs- oder Messzeitpunkt der Werte W(n) bis W(n-m) für die Verstellkraft gewichteten Bewertung zurückliegender Werte W(n-m) einer die Verstellkraft kennzeichnenden Größe 1 zur Ermittlung der die Klemmkraft kennzeichnenden Größe 8.

In Figur 1 ist eine Blockschaltung eines erstes Ausführungsbeispiels angegeben. Eine Verstellkraft kennzeichnende Größe 1 wird in gleichmäßigen zeitlichen Abständen und/oder nach bestimmten vom Verstellantrieb zurückgelegten Wegsegmenten ermittelt und in den Speicher 2 geschrieben. Beispielsweise werden mittels mindestens eines nicht näher dargestellten Sensors als Messwerte oder Werte W(n) bis W(n-m) einer die momentane Verstellkraft kennzeichnende Größe 1 der Motorstrom, die Motorklemmenspannung, die vom Motor induzierten Spannung, die Drehzahl, die Verstellgeschwindigkeit, der Ankerwiderstand, die Ankerinduktivität, das Rotorträgheitsmoment, die Motortemperatur und/oder die Motorkennlinie des Verstellantriebs erfasst. Bei jedem Speichervorgang werden die erfassten Messwerte (kurz Werte W(n) bis W(n-m) genannt) im dargestellten Speicher 2 einen Speicheradresse oder -block weiter nach unten geschoben und der aktuell ermittelte Wert W(n) der die Verstellkraft kennzeichnenden Größe 1 in den obersten Speicherblock gespeichert.

In einer anderen Realisierung des erfinduhgsgemäßen Verfahrens kann der Speicher 2 auch als so genannter Ringspeicher ausgeführt sein, bei dem die Werte W(n) bis W(n-m) nacheinander in einem Speicher abgelegt werden und wenn das Ende des Speichers erreicht ist, wird wieder am Speicheranfang begonnen. Die Adressierung von vergangenen Werten W(n-m) wird dann immer relativ zur aktuellen Speicheradresse vorgenommen.

Zur Ermittlung der beim Verstellvorgang erfolgten Änderung der Verstellkraft wird in einem nächsten Schritt mittels eines Summenglieds im Block 3 die Differenz zwischen dem momentanen Wert W(n) der Verstellkraft kennzeichnenden Größe 1 und einem vorangegangenen Wert W(n-m) der Größe 1, beispielsweise dem ermittelten Wert W(n-5) der Größe 1 zu einem früheren Zeitpunkt, bestimmt. Diese Differenz wird im Block 5 mit einem Gewichtungsfaktor $k_1$ multipliziert. Der Gewichtungsfaktor $k_1$ bestimmt sich dabei anhand des Zeitabstands zwischen dem Erfassungszeitpunkt des momentanen Werts W(n) und dem Erfassungszeitpunkt des vorangegangenen Werts W(n-5).

Im Block 4 wird eine weitere Differenz zwischen dem aktuell ermittelten Wert W(n) der die Verstellkraft kennzeichnenden Größe 1 und dem ermittelten Wert W(n-m) zu einem früheren Zeitpunkt ermittelt. Diese Differenz wird dann im Block 6 mit einem zugehörigen Gewichtungsfaktor $k_2$ multipliziert, der erfindungsgemäß aufgrund des größeren zeitlichen Abstands der weiteren Differenz kleiner ist als der Gewichtungsfaktor $k_1$.

Die Klemmkraft kennzeichnende Größe 8 wird im Block 7 dann durch Addition der beiden Differenzen von Block 5 und Block 6 gebildet.

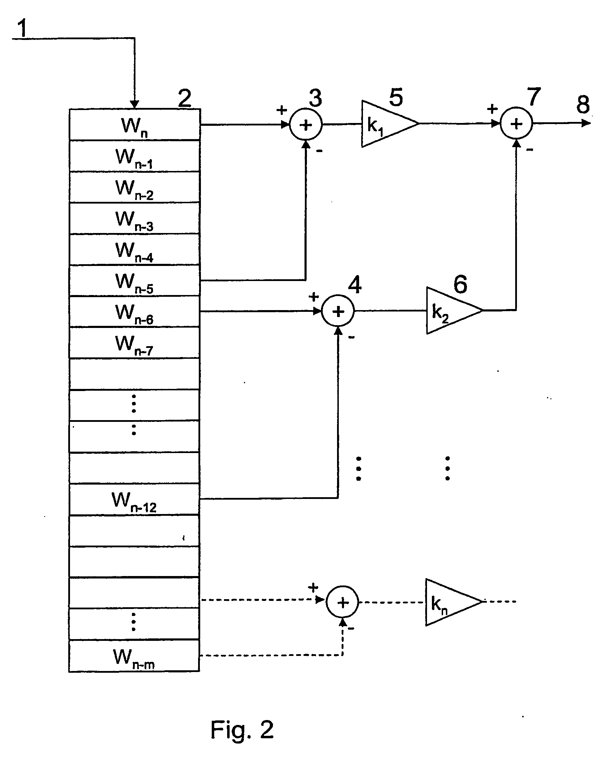

In Figur 2 ist ein zweites Ausführungsbeispiel angegeben, dass dem ersten Ausführungsbeispiel sehr ähnlich ist. Der Unterschied besteht darin, dass zur Bildung der zweiten Differenz nicht der aktuelle Wert W(n) und ein zurückliegender Wert W(n-m) der die Verstellkraft kennzeichnenden Größe 1 verwendet wird, sondern es werden zwei Werte W(n-k), W(n-m) die unterschiedlich weit zurückliegen verwendet, z. B. des Wertepaares W(n) und W(n-5) und des Wertepaares W(n-6) und W(n-12). Eine derartige Berücksichtigung unterschiedlich langer zurückliegender Werte und deren Differenzen ermöglicht eine bereichsweise Überwachung des Verstellvorgangs. Beispielsweise wird der Anfangsbereich oder der Endbereich beim Schließen eines Fensters mit unterschiedlichen Zeitabständen zwischen den Werten W(n-k) und W(n-m) zur Differenzbildung überwacht, wobei der Endbereich des Verstellvorgangs mit einem deutlich geringeren Zeitabstand der Werte W(n-k) und W(n-m) überwacht wird als der Anfangsbereich. Dies ermöglicht im weniger kritischen Anfangsbereich mit einer noch großen Öffnung des Fensters eine Speicher- und Arbeitskapazität sparende Verarbeitung der Messwerte und im kritischen Endbereich mit einer sehr kleinen Öffnung des Fensters und einer hohen Gefahr des Einklemmens eines Objekts eine schnelle und sichere Identifizierung eines möglichen Einklemmens. Die jeweilige Differenz mit kleinem oder großen Zeitabstand der zugrunde liegenden Werte W(n-k) und W(n-m) wird darüber hinaus mit einem zugehörigen zeitabhängigen Gewichtungsfaktor $k_1$ bzw. $k_2$ verarbeitet, wobei die Differenz mit dem kürzeren Zeitabstand eine höhere Gewichtung zugeordnet wird als die Differenz mit einem größeren Zeitabstand.

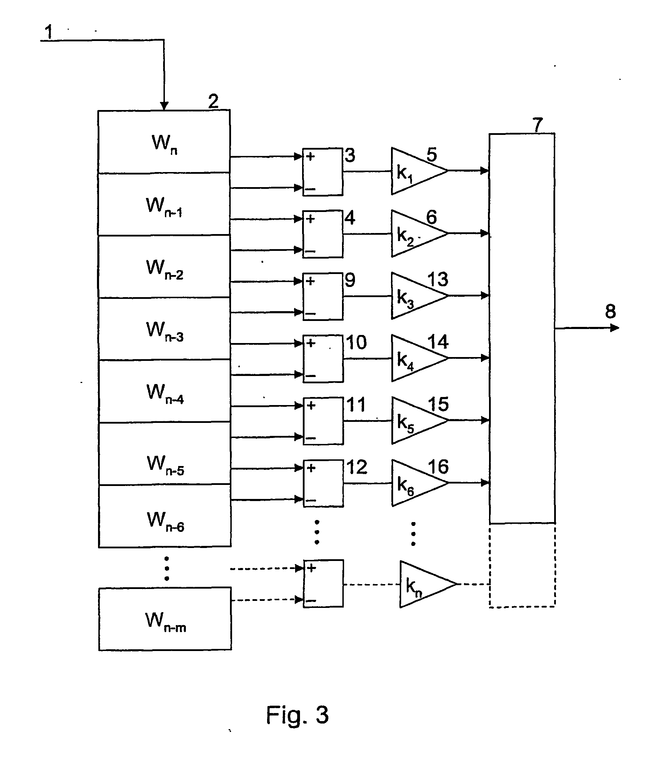

In Figur 3 ist ein drittes Ausführungsbeispiel angegeben, bei dem die Verstellkraft kennzeichnende Größe 1 wieder wie im ersten Ausführungsbeispiel im Speicher 2 abgelegt wird. In den Blöcken 3, 4, 9, 10, 11 und 12 wird jeweils die Differenz zwischen zwei aufeinander folgenden Werten ermittelt und die jeweilige Differenz in den Blöcken 5, 6, 13, 14, 15 und 16 mit einem zugehörigen, zeitabhängigen Gewichtungsfaktor $k_1$, $k_2$, $k_3$, $k_4$, $k_5$, $k_6$ bis $k_n$ multipliziert. Mit anderen Worten: Für eine permanente und zeitnahe Überwachung des Verstellvorgangs werden vorzugsweise als Wertepaare für die Differenzbildung Werte W(n-k), W(n-m) von unmittelbar aufeinander folgenden Werten W(n) und W(n-1) oder W(n-1) und W(n-2) oder W(n-2) und W(n-3), usw. verwendet. Im Block 7 wird dann die Klemmkraft kennzeichnende Größe 8 durch Addition aller Einzelergebnisse gebildet.

In einer bevorzugten Ausgestaltung werden hierbei die Gewichtungsfaktoren $k_1$ bis $k_n$ mit den kleinen Indizes $k_1$, $k_2$ größer gewählt als die mit den großen Indizes $k_5$, $k_6$.

In einem weiteren Ausführungsbeispiel wird die Differenz zwischen dem aktuell ermittelten Wert W(n) der die Verstellkraft kennzeichnenden Größe 1 und dem zuvor ermittelten Wert W(n-1) der die Verstellkraft kennzeichnenden Größe 1 einem nicht-rekursiven digitalen System mit der

Übertragungsfunktion

$$H(z) = \sum_{\mu=0}^{M} b_\mu \cdot z^{-\mu} \qquad\qquad [1]$$

zugeführt. Das Ausgangssignal des Systems wird jeweils nach der Erfassung eines neuen Eingangswertes ermittelt. Hierbei werden die Faktoren $b_\mu$ für kleine Werte von $\mu$ größer eingestellt als für große Werte von $\mu$. Der Ausgang des digitalen Systems entspricht der die Klemmkraft kennzeichnenden Größe 8, die anschließend mit einer Auslöseschwelle verglichen wird, wobei beim Überschreiten dieser Schwelle der Antrieb abgeschaltet oder reversiert wird.

Ein weiterer Vorteil des Verfahrens ist darin zu sehen, dass nur Addition, Subtraktion und Multiplikationsoperationen benötigt werden. Diese Operationen können von den üblicherweise in solchen Verstellantrieben eingesetzten Mikrocomputern sehr schnell berechnet werden.

In einer weiterführenden Ausgestaltung des erfindungsgemäßen Verfahrens werden die Gewichtungsfaktoren $k_1$ bis $k_n$ und/oder die zur Differenzbildung herangezogenen Speicherpositionen in Abhängigkeit von der Verstellgeschwindigkeit eingestellt. Vorteilhafterweise werden hierbei die, den nicht so weit zurückliegenden Anstiegen zugeordneten, Gewichtungsfaktoren $k_1$ bis $k_n$ bei höheren Verstellgeschwindigkeiten höher eingestellt als bei niedrigeren Verstellgeschwindigkeiten.

Bei einer Ermittlung der die Verstellkraft kennzeichnenden Größe 1 in gleichmäßigen Zeitabständen ist es vorteilhaft bei schnelleren Verstellgeschwindigkeiten den Abstand der zur Differenzbildung herangezogenen Speicherpositionen kleiner zu wählen als bei niedrigeren Verstellgeschwindigkeiten, da sich bei schnelleren Verstellgeschwindigkeiten die Klemmkraft schneller aufbaut als bei langsamen Verstellgeschwindigkeiten.

In einer weiterführenden Ausgestaltung des erfindungsgemäßen Verfahrens werden die Gewichtungsfaktoren $k_1$ bis $k_n$ und/oder die zur Differenzbildung herangezogenen Speicherpositionen in Abhängigkeit von der aktuellen Verstellposition eingestellt. Vorzugsweise werden in den Verstellbereichen, in denen bei vorherigen Läufen Schwergängigkeiten festgestellt wurde, die Gewichtungsfaktoren $k_1$ bis $k_n$ für die den weiter zurückliegenden Anstiegen zugeordneten Gewichtungsfaktoren verringert und/oder es werden zur Differenzbildung die Speicherpositionen herangezogen die nicht so weit zurückliegen. Der Vorteil dieser Ausgestaltung liegt darin, dass Fehlauslösungen des Einklemmschutzsystems aufgrund von Schwergängigkeiten verhindert werden, wobei gleichzeitig die Erkennung, insbesondere von härteren Klemmkörpern, nicht beeinträchtigt wird.

Eine weitere Ausgestaltung des erfindungsgemäßen Verfahrens sieht vor, die Gewichtungsfaktoren $k_1$ bis $k_n$ und/oder die zur Differenzbildung herangezogenen Speicherpositionen im Bereich des Einlaufs der Scheibe in die obere Dichtung dergestalt zu ändern, dass durch die erhöhten Reibungskräfte kurz vor und während des Dichtungseinlaufs kein fehlerhaftes Auslösen des Einklemmschutzsystems auftritt. Vorteilhafterweise werden hierbei die den weiter zurückliegenden Anstiegen zugeordneten Gewichtungsfaktoren $k_1$ bis $k_n$ verringert und/oder zur Differenzbildung die Speicherpositionen herangezogen, die nicht so weit zurückliegen.

In einer weiteren Ausführungsform ist vorgesehen die Gewichtungsfaktoren $k_1$ bis $k_n$ und/oder die zur Differenzbildung herangezogenen Speicherpositionen im Bereich 25 mm vor der oberen Dichtung anders zu wählen als im restlichen Bereich um den unterschiedlichen Elastizitäten der Klemmkörper bei unterschiedlichen Durchmessern in der Vorschrift FMVSS 118 Rechnung zu tragen.

Eine weitere Ausgestaltung sieht vor, nach dem Start des Verstellantriebs für eine bestimmte Zeit und/oder für einen bestimmten Wegabschnitt die Gewichtungsfaktoren $k_1$ bis $k_n$ und/oder die zur Differenzbildung herangezogenen Speicherpositionen dergestalt zu verändern, dass Fehlauslösungen des Einklemmschutzsystems auf Grund des Einschwingverhaltens des Antriebs verhindert werden und dabei gleichzeitig Einklemmsituationen sicher erkannt werden. Vorteilhafterweise werden hierbei die den weiter zurückliegenden Anstiegen zugeordneten Gewichtungsfaktoren $k_1$ bis $k_n$ verringert und/oder die Speicherpositionen zur Differenzbildung herangezogen, die nicht so weit zurückliegen.

Ein weiterer Vorteil des Verfahrens liegt darin, dass auch unter gestörten Betriebsbedingungen eine Einstellung der Zeitabstände und/oder Speicherpositionen zur Differenzbildung und/oder weiterer Parameter, insbesondere Betriebsparameter des Fahrzeugs derart erfolgt, dass Einklemmsituationen erkannt werden und es durch die Störungen nicht zu Fehlauslösungen des Einklemmschutzsystems kommt.

So wird in einer speziellen Ausgestaltung des Verfahrens festgestellt, ob und mit welcher Geschwindigkeit sich das Fahrzeug bewegt und die Gewichtungsfaktoren $k_1$ bis $k_n$ derart angepasst, dass die Änderung in der die Verstellkraft kennzeichnenden Größe 1, die durch auf die Kraftfahrzeugkarosserie einwirkenden Beschleunigungskräfte beim Befahren einer holperigen Straße verursacht werden, nicht als Erhöhung der die Klemmkraft kennzeichnenden Größe 8 interpretiert wird. Hierzu werden z.B. ab einer bestimmten Geschwindigkeit die den weiter zurückliegenden Anstiegen zugeordneten Gewichtungsfaktoren $k_1$ bis $k_n$ verkleinert und/oder zur Differenzbildung die nicht so weit zurückliegenden Speicherpositionen verwendet.

In einer weiteren Ausgestaltung ist vorgesehen, das bei Veränderungen der Bordnetzspannung die den weiter zurückliegenden Anstiegen zugeordneten Gewichtungsfaktoren kn zu verkleinern und/oder zur Differenzbildung die nicht so weit zurückliegenden Speicherpositionen zu verwenden, um zu verhindern, dass die durch die Veränderung der Bordnetzspannung verursachte Veränderung der die Verstellkraft kennzeichnenden Größe 1 nicht als Änderungen der die Klemmkraft kennzeichnenden Größe 8 interpretiert werden.

Bezugszeichenliste

| 1. | eine die Verstellkraft kennzeichnende Größe |
|---|---|
| 2 | Speicher |
| 3 bis 4 | Blöcke zur Differenzbildung |
| 5 bis 6 | Blöcke zur Gewichtung |
| 8 | eine die Klemmkraft kennzeichnende Größe |
| 9 bis 12 | Blöcke zur Differenzbildung |
| 13 bis 16 | Blöcke zur Gewichtung |
| $k_1$ bis $k_n$ | Gewichtungsfaktor |
| W(n) bis W(n-m) | Messwerte einer die Verstellkraft kennzeichnenden Größe |

**Patentansprüche**

**1.** Verfahren zur Erkennung von Einklemmsituationen bei einer motorgetriebenen Verstelleinrichtung, wobei während eines Verstellvorganges entlang einer Antriebsrichtung Werte (W(n) bis W(n-m)) des Motorstromes der motorgetriebenen Verstelleinrichtung oder daraus abgeleiteter Werte (1) ermittelt und gespeichert werden und aus diesen abgeleiteten gespeicherten Werten eine die Klemmkraft der Verstelleinrichtung kennzeichnende Größe (8) ermittelt wird, wobei die motorgetriebene Verstelleinrichtung gestoppt oder die Antriebsrichtung der motorgetriebenen Verstelleinrichtung umgekehrt wird, wenn die die Klemmkraft kennzeichnende Größe (8) eine vorgegebene Auslöseschwelle überschreitet, **dadurch gekennzeichnet, dass** aus mindestens zwei während des Verstellvorgangs entlang der Antriebsrichtung gespeicherten Werten (W(n) bis W(n-m)) Differenzen gebildet werden und jede dieser Differenzen mit einem zughörigen Gewichtungsfaktor k multipliziert wird und die die Klemmkraft der Verstelleinrichtung kennzeichnende Größe (8) durch Addition der mit einem zugehörigen Gewichtungsfaktor k multiplizierten Differenzen errechnet wird.

**2.** Verfahren nach Anspruch 1, **dadurch gekennzeichnet, dass** die Messwerte (W(n) - W(n-m)) der die Verstellkraft kennzeichnende Größe (1) oder einer aus diesen Messwerten (W(n) - W(n-m)) abgeleiteten Größen hinsichtlich ihres Erfassungszeitpunkt derart gewichtet werde, dass derjenige Wert (W(n) - W(n-m)) umso schwächer gewichtet wird, dessen Erfassungszeitpunkt zeitlich länger zurückliegt.

**3.** Verfahren nach Anspruch 1 oder 2, **dadurch gekennzeichnet, dass** die die jeweils aktuell vorliegende Verstellkraft kennzeichnende Größe (1) aus einer Motorklemmenspannung und/oder einer vom Motor induzierten Spannung und/oder einer Drehzahl und/oder einer Verstellgeschwindigkeit und/oder eines Ankerwiderstandes und/oder einer Ankerinduktivität und/oder einem Rotorträgheitsmoment und/oder einer Temperatur und/oder aus Motorkennlinien ermittelt wird.

**4.** Verfahren nach einem der Ansprüche 1 bis 3, **dadurch gekennzeichnet, dass** die Werte (W(n) bis W(n-m)) in gleichmäßigen zeitlichen Abständen und/oder nach bestimmten vom Antrieb zurückgelegten Wegsegmenten erfasst werden.

**5.** Verfahren nach einem der vorherigen Ansprüche, **dadurch gekennzeichnet, dass** als abgeleitete Größe eine, zwei oder mehrere Differenzen von gespeicherten Werten (W(n) bis W(n-m)) gebildet werden, anschließend zum Gewichten jede dieser Differenzen mit einem zugehörigen Gewichtungsfaktor ($k_1$ bis $k_n$) multipliziert wird.

**6.** Verfahren nach Anspruch 5, **dadurch gekennzeichnet, dass** einer der zur Differenzbildung herangezogenen Werte (W(n) bis W(n-m)) dem zuletzt gespeicherten Wert (W(n)) entspricht.

**7.** Verfahren nach Anspruch 5 oder 6, **dadurch gekennzeichnet, dass** als zur Differenzbildung herangezogene Werte (W(n) bis W(n-m)) unterschiedlich lang zurückliegende Werte (W(n) bis W(n-m)) verwendet werden.

**8.** Verfahren nach einem der Ansprüche 5 bis 7, **dadurch gekennzeichnet, dass** zum Bilden wenigstens einer der Differenzen jeweils unmittelbar aufeinander folgende abgespeicherte Werte (W(n) bis W(n-m)) herangezogen werden.

**9.** Verfahren nach einem der vorherigen Ansprüche 5 bis 8, **dadurch gekennzeichnet, dass** der jeweilige Gewichtungsfaktor ($k_n$) vom Abstand zwischen der Speicherposition des zuletzt gespeicherten Wertes und der Speicherposition des ersten zur Differenzbildung herangezogenen Werte abhängig ist.

**10.** Verfahren nach Anspruch 9, **dadurch gekennzeichnet, dass** der jeweilige Gewichtungsfaktor ($k_n$) vom Abstand zwischen der Speicherposition des zuletzt gespeicherten Wertes und der Speicherposition mindestens eines zeitlich vor dem zuletzt gespeicherten Wert hinterlegten Wertes abhängig ist.

**11.** Verfahren nach einem der vorherigen Ansprüche 5 bis 10, **dadurch gekennzeichnet, dass** der jeweilige Gewichtungsfaktor ($k_n$) vom Abstand der betreffenden Speicherpositionen der zum Bilden der betreffenden Differenz herangezogenen Werte abhängig ist.

**12.** Verfahren nach einem der vorherigen Ansprüche 5 bis 11, **dadurch gekennzeichnet, dass** die jeweiligen Gewichtungsfaktoren ($k_n$) und/oder die zur Differenzbildung herangezogenen Speicherpositionen in Abhängigkeit von der aktuellen Verstellgeschwindigkeit der Verstelleinrichtung festgelegt werden.

**13.** Verfahren nach einem der vorherigen Ansprüche 5 bis 12, **dadurch gekennzeichnet, dass** die jeweiligen Gewichtungsfaktoren ($k_n$) und/oder die zur Differenzbildung herangezogenen Speicherpositionen in Abhängigkeit von der aktuellen Verstellposition und/oder von einer bei vorherigen Verstellvorgängen an dieser Verstellposition ermittelten, die Verstellkraft kennzeichnenden Größe (1) und/oder von einer bei vorherigen Verstellvorgängen an dieser Verstellposition ermittelten, die Klemmkraft kennzeichnenden Größe (8) und/oder der Zeitspanne seit einem letzten Verstellvorgang festgelegt werden.

**14.** Verfahren nach einem der vorherigen Ansprüche 5 bis 13, **dadurch gekennzeichnet, dass** ein Verstellweg in mehrere Bereiche eingeteilt wird und die Gewichtungsfaktoren ($k_n$) und/oder die zur Differenzbildung herangezogenen Speicherpositionen in den einzelnen Bereichen unterschiedlich eingestellt werden.

**15.** Verfahren nach einem der vorherigen Ansprüche, **dadurch gekennzeichnet, dass** der oberste Bereich eines Fensterheberverstellantriebs wenige Millimeter unterhalb der oberen Dichtung beginnt und an der oberen Anschlagposition endet.

**16.** Verfahren nach einem der vorherigen Ansprüche 5 bis 15, **dadurch gekennzeichnet, dass** nach dem Start des Verstellvorgangs für eine vorgebbare Zeit und/oder für einen bestimmten, vom Antrieb zurückgelegten Weg die Gewichtungsfaktoren ($k_n$) und/oder die zur Differenzbildung herangezogenen Speicherpositionen anders eingestellt werden als im übrigen Betrieb.

**17.** Verfahren nach einem der vorherigen Ansprüche 5 bis 16, **dadurch gekennzeichnet, dass** die Gewichtungsfaktoren $k_n$ und/oder die zur Differenzbildung herangezogenen Speicherpositionen in Abhängigkeit von der Fahrzeuggeschwindigkeit eingestellt werden.

**18.** Verfahren nach einem der vorherigen Ansprüche 5 bis 17, **dadurch gekennzeichnet, dass** die Gewichtungsfaktoren ($k_n$) und/oder die zur Differenzbildung herangezogenen Speicherpositionen in Abhängigkeit von einer Änderung der Bordnetzspannung eingestellt werden.

**19.** Verstelleinrichtung zur Durchführung eines Verfahrens nach einem der vorhergehenden Ansprüche 1 bis 18, **gekennzeichnet durch** einen Motorantrieb, wobei während eines Verstellvorgangs in einer Antriebsrichtung Werte (W(n) bis W(n-m)) einer eine zu einem Messzeitpunkt jeweils aktuell vorliegende Verstellkraft kennzeichnenden Größe (1) oder einer damit korrespondierenden Größe ermittelbar und speicherbar sind und anhand von zumindest zwei gespeicherten Werten (W(n) bis W(n-m)) eine eine Klemmkraft der Verstelleinrichtung kennzeichnende Größe (8) ermittelbar ist, wobei die Werte (W(n) bis W(n-m)), die zum Ermitteln der die Klemmkraft kennzeichnenden Größe (8) verwendet werden, oder aus diesen Werten (W(n) bis W(n-m)) abgeleitete Größen hinsichtlich ihres Messzeitpunkts miteinander verglichen und gewichtet werden, wobei anhand der gewichteten Werte die die Klemmkraft kennzeichnende Größe (8) ermittelt und mit einer Auslöseschwelle verglichen wird und bei Überschreiten dieser Auslöseschwelle der Verstellvorgang gestoppt und/oder die Antriebsrichtung umgedreht wird.

**Claims**

**1.** Method for the recognition of jamming situations in a motor-driven adjusting device, wherein, during an adjusting operation along a driving direction, values (W(n) to W(n-m)) of the motor current of the motor-driven adjusting device or of values (1) derived therefrom are determined and stored and a quantity (8) characterizing the jamming force of the adjusting device is determined from these derived stored values, wherein the motor-driven adjusting device is stopped or the driving direction of the motor-driven adjusting device is reversed if the quantity (8) characterizing the jamming force exceeds a predetermined tripping limit, **characterized in that** differences are formed from at least two values (W(n) to W(n-m)) stored during the adjusting operation along the driving direction and each of these differences is multiplied by an associated weighting factor k and the quantity (8) characterizing the jamming force of the adjusting device is calculated by adding up the differences multiplied by an associated weighting factor k.

2. Method according to claim 1, **characterized in that** the measured values (W(n) to W(n-m)) of the quantity (1) characterizing the adjusting force or of a quantity derived from these measured values (W(n) to W(n-m)) are weighted with regard to their instants of acquisition in such a manner that the lesser weight is assigned to the value (W(n) to W(n-m)) with the earlier instant of acquisition.

3. Method according to claim 1 or 2, **characterized in that** the quantity (1) characterizing the instantaneous adjusting force is determined from a motor terminal voltage and/or from a voltage induced by the motor and/or from a motor speed and/or from an adjusting speed and/or from an armature resistance and/or from an armature inductance and/or from a moment of inertia of the rotor and/or from a temperature and/or from motor characteristics.

4. Method according to any one of claims 1 to 3, **characterized in that** the values (W(n) to W(n-m)) are acquired at constant intervals and/or after particular path segments covered by the drive.

5. Method according to any one of the preceding claims, **characterized in that** one, two or several differences of stored values (W(n) to W(n-m)) are formed as a derived quantity and that each of these differences is then multiplied, for weighting, by an associated weighting factor ($k_1$ to $k_n$).

6. Method according to claim 5, **characterized in that** one of the values (W(n) to W(n-m)) used for forming differences corresponds to the value (W(n)) that was stored last.

7. Method according to claim 5 or 6, **characterized in that** values (W(n) to W(n-m)) that were acquired at different times are used as values (W(n) to W(n-m)) used for forming differences.

8. Method according to any one of claims 5 to 7, **characterized in that** directly successive stored values (W(n) to W(n-m)) are used for forming at least one of the differences.

9. Method according to any one of the preceding claims 5 to 8, **characterized in that** the respective weighting factor ($k_n$) is dependent on the distance between the memory location of the value that was stored last and the memory location of the first value used for forming differences.

10. Method according to claim 9, **characterized in that** the respective weighting factor ($k_n$) is dependent on the distance between the memory location of the value that was stored last and the memory location of at least one value that was stored earlier than the value that was stored last.

11. Method according to any one of the preceding claims 5 to 10, **characterized in that** the respective weighting factor ($k_n$) is dependent on the distance of the respective memory locations of the values used for forming the respective difference.

12. Method according to any one of the preceding claims 5 to 11, **characterized in that** the respective weighting factors ($k_n$) and/or the memory locations used for forming differences are fixed in dependence on the current adjusting speed of the adjusting device.

13. Method according to any one of the preceding claims 5 to 12, **characterized in that** the respective weighting factors ($k_n$) and/or the memory locations used for forming differences are fixed in dependence on the current adjusting position and/or on a quantity (1) that characterizes the adjusting force and was determined at this adjusting position in previous adjusting operations and/or on a quantity (8) that characterizes the jamming force and was determined at this adjusting position in previous adjusting operations and/or on the period of time that has passed since a last adjusting operation.

14. Method according to any one of the preceding claims 5 to 13, **characterized in that** an adjusting path is divided into several portions and that the weighting factors ($k_n$) and/or the memory locations used for forming differences are differently adjusted in the individual portions.

**15.** Method according to any one of the preceding claims, **characterized in that** the uppermost portion of a window-lifter adjusting drive begins few millimetres below the upper seal and ends at the upper stop position.

**16.** Method according to any one of the preceding claims 5 to 15, **characterized in that** after the start of the adjusting operation, for a presettable time and/or for a particular path covered by the drive, the weighting factors ($k_n$) and/or the memory locations used for forming differences are adjusted such that they are different from those in the rest of the operation.

**17.** Method according to any one of the preceding claims 5 to 16, **characterized in that** the weighting factors ($k_n$) and/or the memory locations used for forming differences are adjusted in dependence on the vehicle speed.

**18.** Method according to any one of the preceding claims 5 to 17, **characterized in that** the weighting factors ($k_n$) and/or the memory locations used for forming differences are adjusted in dependence on a change of the voltage of the electrical supply system of the vehicle.

**19.** Adjusting device for executing a method according to any one of the preceding claims 1 to 18, **characterized by** a motor drive, wherein, during an adjusting operation in a driving direction, values (W(n) to W(n-m)) of a quantity (1) characterizing an instantaneous adjusting force at an instant of measurement or of a quantity corresponding thereto can be determined and stored and a quantity (8) characterizing a jamming force of the adjusting device can be determined on the basis of at least two stored values (W(n) to W(n-m)), wherein the values (W(n) to W(n-m)) used for determining the quantity (8) characterizing the jamming force or quantities derived from these values (W(n) to W(n-m)) are compared and weighted with each other with regard to their instants of measurement, wherein, on the basis of the weighted values, the quantity (8) characterizing the jamming force is determined and compared with a tripping limit and the adjusting operation is stopped and/or the driving direction is reversed if this tripping limit is exceeded.

**Revendications**

**1.** Procédé de détection de situations de serrage dans le cas d'un dispositif de manoeuvre entraîné par moteur, des valeurs (W(n) à W(n-m)) du courant de moteur du dispositif de manoeuvre entraîné par moteur pendant un processus de manoeuvre le long d'une direction d'entraînement ou des valeurs (1) qui en sont dérivées étant déterminées et enregistrées, et une grandeur (8) caractérisant la force de serrage du dispositif de manoeuvre étant déterminée à partir de ces valeurs dérivées enregistrées, le dispositif de manoeuvre entraîné par moteur étant arrêté ou la direction d'entraînement du dispositif de manoeuvre entraîné par moteur étant inversée quand la grandeur (8) caractérisant la force de serrage dépasse un seuil de déclenchement prédéfini, **caractérisé en ce que** des différences sont formées à partir d'au moins deux valeurs (W(n) à W(n-m)) enregistrées pendant le processus de manoeuvre le long de la direction d'entraînement, et chacune de ces différences est multipliée par un facteur de pondération k correspondant, et la grandeur (8) caractérisant la force de serrage du dispositif de manoeuvre est calculée par l'addition des différences multipliées par un facteur de pondération k correspondant.

**2.** Procédé selon la revendication 1, **caractérisé en ce que** les valeurs de mesure (W(n) - W(n-m)) de la grandeur (1) caractérisant la force de manoeuvre ou d'une des grandeurs dérivée à partir de ces valeurs (W(n) - W(n-m)) sont, en ce qui concerne l'instant de leur saisie, pondérées de sorte que la valeur (W(n) - W(n-m)) est d'autant plus faiblement pondérée que son instant de saisie est le plus ancien.

**3.** Procédé selon la revendication 1 ou 2, **caractérisé en ce que** la grandeur (8) caractérisant la force de manoeuvre respectivement actuellement présente est déterminée à partir d'une tension aux bornes du moteur et/ou d'une tension induite par le moteur et/ou d'une vitesse de rotation et/ou d'une vitesse de manoeuvre et/ou d'une résistance d'induit et/ou d'une inductance d'induit et/ou d'un moment d'inertie de rotor et/ou d'une température et/ou de courbes caractéristiques de moteur.

**4.** Procédé selon une des revendications 1 à 3, **caractérisé en ce que** les valeurs (W(n) à W(n-m)) sont saisies à des intervalles de temps réguliers et/ou après certains segments de déplacement parcourus par l'entraînement.

**5.** Procédé selon une des revendications précédentes, **caractérisé en ce que**, en tant que grandeur dérivée, une, deux ou plusieurs différences de valeurs (W(n) à W(n-m)) enregistrées sont formées et, ensuite, pour la pondération, chacune de ces différences est multipliée par un facteur de pondération ($k_1$ à $k_n$) correspondant.

**6.** Procédé selon la revendication 5, **caractérisé en ce que**, à une des valeurs (W(n) à W(n-m)) employées pour la soustraction, correspond la valeur (W(n)) enregistrée en dernier.

**7.** Procédé selon la revendication 5 ou 6, **caractérisé en ce que**, en tant que valeurs (W(n) à W(n-m)) employés pour la soustraction, on utilise des valeurs (W(n) à W(n-m)) plus ou moins éloignées dans le passé.

**8.** Procédé selon une des revendications 5 à 7, **caractérisé en ce que**, pour au moins une des soustractions, il est fait appel respectivement à des valeurs (W(n) à W(n-m)) enregistrées qui se succèdent directement.

**9.** Procédé selon une des revendications précédentes 5 à 8, **caractérisé en ce que** le facteur de pondération ($K_n$) respectif est fonction de l'intervalle entre la position d'enregistrement de la valeur enregistrée en dernier et de la position d'enregistrement de la première valeur utilisée pour la soustraction.

**10.** Procédé selon la revendication 9, **caractérisé en ce que** le facteur de pondération ($K_n$) respectif est fonction de l'intervalle entre la position d'enregistrement de la valeur enregistrée en dernier et de la position d'enregistrement d'au moins une valeur mise en mémoire avant la valeur enregistrée en dernier.

**11.** Procédé selon une des revendications précédentes 5 à 10, **caractérisé en ce que** le facteur de pondération ($K_n$) respectif est fonction de l'intervalle des positions d'enregistrement concernées des valeurs employées pour la soustraction concernée.

**12.** Procédé selon une des revendications précédentes 5 à 11, **caractérisé en ce que** les facteurs de pondération ($K_n$) respectifs et/ou les positions d'enregistrement employées pour la soustraction sont déterminés en fonction de la vitesse de manoeuvre actuelle du dispositif de manoeuvre.

**13.** Procédé selon une des revendications précédentes 5 à 12, **caractérisé en ce que** les facteurs de pondération ($K_n$) respectifs et/ou les positions d'enregistrement employées pour la soustraction sont déterminés en fonction de la position de manoeuvre actuelle et/ou d'une grandeur (1) caractérisant la force de manoeuvre et déterminée lors de processus de manoeuvre antérieurs au niveau de cette position de manoeuvre, et/ou d'une grandeur (8) caractérisant la force de serrage et déterminée lors de processus de manoeuvre antérieurs au niveau de cette position de manoeuvre, et/ou de la période de temps depuis un dernier processus de manoeuvre.

**14.** Procédé selon une des revendications précédentes 5 à 13, **caractérisé en ce qu'**une course de manoeuvre est divisée en plusieurs secteurs, et **en ce que** les facteurs de pondération ($K_n$) et/ou les positions d'enregistrement employées pour la soustraction sont réglé(e)s de façon différenciée dans les différents secteurs.

**15.** Procédé selon une des revendications précédentes, **caractérisé en ce que** le secteur supérieur d'un entraînement de manoeuvre de lève-vitre commence quelques millimètres au-dessous du joint d'étanchéité supérieur et finit au niveau de la position de butée supérieure.

**16.** Procédé selon une des revendications précédentes 5 à 15, **caractérisé en ce que**, après le départ du processus de manoeuvre, pendant un temps paramétrable et/ou pour une course définie parcourue par l'entraînement, les facteurs de pondération ($K_n$) et/ou les positions d'enregistrement employées pour la soustraction sont réglé(e)s d'une façon différente par rapport au reste du fonctionnement.

**17.** Procédé selon une des revendications précédentes 5 à 16, **caractérisé en ce que** les facteurs de pondération ($K_n$) et/ou les positions d'enregistrement employées pour la soustraction sont réglé(e)s en fonction de la vitesse du véhicule.

**18.** Procédé selon une des revendications précédentes 5 à 17, **caractérisé en ce que** les facteurs de pondération ($K_n$) et/ou les positions d'enregistrement employées pour la soustraction sont réglé(e)s en fonction d'une variation de la tension du réseau de bord.

**19.** Dispositif de manoeuvre pour la réalisation d'un procédé selon une des revendications précédentes 1 à 18, **caractérisé par** un entraînement motorisé, des valeurs (W(n) à W(n-m)) d'une grandeur (1) caractérisant une force de manoeuvre respectivement actuellement présente à un instant de mesure pendant un processus de manoeuvre dans une direction d'entraînement ou d'une grandeur qui y correspond pouvant être déterminées et enregistrées, et une grandeur (8) caractérisant une force de serrage du dispositif de manoeuvre pouvant être déterminée à l'aide d'au moins deux valeurs (W(n) à W(n-m)) enregistrées, les valeurs (W(n) à W(n-m)) qui sont utilisées pour déterminer la grandeur (8) caractérisant la force de serrage, ou des grandeurs dérivées de ces valeurs (W(n) à W(n-m)) étant, en ce qui concerne leur instant de mesure, comparées entre elles et pondérées, la grandeur (8) caractérisant la force de serrage étant déterminée à l'aide des valeurs pondérées et comparée à un seuil de déclenchement, et en cas de dépassement de ce seuil de déclenchement, le processus de manoeuvre étant arrêté et/ou la direction d'entraînement étant inversée.

Fig. 1

Fig. 2

Fig. 3

**EP 1 771 929 B1**

**IN DER BESCHREIBUNG AUFGEFÜHRTE DOKUMENTE**

**In der Beschreibung aufgeführte Patentdokumente**

- EP 0716492 A
- US 2003222610 A
- DE 2727518
- DE 2756972
- DE 3034118
- DE 3303590
- DE 3532078
- EP 331659 A
- DE 4000730
- DE 19840162 A1
- DE 19941475
- DE 19840164 A1